# FASCICULE DE BREVET EUROPEEN

(11) **EP 0 402 290 B1**
(45) Date de publication et mention de la délivrance du brevet: **10.02.1993**
(21) Numéro de dépôt: 90440050.4
(22) Date de dépôt: 06.06.1990
(51) Int. Cl.: A01B 49/06, A01C 7/20

(54) **Dispositif perfectionné d'implantation de semence dans le sol, semoir et machine combinée de préparation de lit de semence et de semis utilisant ledit dispositif**
Verbesserung an einem Säsystem, Sämaschine und kombinierte Maschine zur Saatbettherrichtung und zum Säen mit einem solchen Säsystem
Improved seed planting device, sowing machine and combined machine for preparing a seedbed and for sowing using the device

(30) Priorité: 06.06.1989 FR 8907631
(43) Date de publication de la demande: 12.12.1990
(73) Titulaire: KUHN S.A., F-67700 Saverne (FR)
(72) Inventeur: Kemmner,Hartmut M., D-7441 Unterensingen (DE)

(56) Documents cités:
- EP-A- 253 998
- DE-A- 3 710 790
- DE-U- 8 715 345

## Description

La présente invention concerne un dispositif d'implantation de semence dans le sol comportant au moins un élément d'implantation de semence dans le sol muni d'une structure porteuse, d'un élément rotatif guidé en rotation dans ladite structure porteuse, de sorte à tourner autour d'un axe de rotation qui s'étend transversalement à la direction d'avance au travail, ledit élément rotatif comportant un support central et des outils fixés sur ledit support central suivant au moins une couronne, au moins sensiblement radiale à l'axe de rotation de l'élément rotatif et d'une conduite de guidage et d'implantation de la semence dans le sol s'étendant devant le support central de l'élément rotatif et passant, durant le travail, au moins partiellement à proximité du bord latéral correspondant des outils respectifs dudit élément rotatif, ladite conduite de guidage et d'implantation de la semence dans le sol étant liée de manière articulée à la structure porteuse au moyen d'un axe de liaison dirigé au moins sensiblement parallèlement à l'axe de rotation de l'élément rotatif et s'étendant devant le support central dudit élément rotatif, le pivotement de la partie inférieure de la conduite de guidage et d'implantation de semence dans le sol vers l'arrière autour dudit axe de liaison se faisant à l'encontre d'un ressort.

Un tel dispositif d'implantation de semence dans le sol connu par EP-A-0253998, comporte une structure porteuse qui supporte un élément rotatif réalisé sous forme de rouleau, et des conduites de guidage et d'implantation de la semence dans le sol. Ledit rouleau est guidé en rotation dans la structure porteuse de sorte à pouvoir tourner autour de son axe longitudinal qui s'étend au moins sensiblement perpendiculairement à la direction d'avance au travail. Il comporte un support central sur lequel sont fixés des outils agencés suivant des couronnes radiales espacées le long dudit support central.

Les conduites de guidage et d'implantation de la semence dans le sol sont, quant à elles, aménagées à des intervalles sensiblement constants suivant une rangée s'étendant au moins sensiblement parallèlement à l'axe longitudinal du rouleau. Elles sont chacune liées à la structure porteuse au moyen d'un axe de liaison dirigé au moins sensiblement parallèlement à l'axe longitudinal du rouleau et s'étendant devant le rouleau. Le pivotement de chaque conduite de guidage et l'implantation de la semence dans le sol vers l'arrière se fait à l'encontre d'un ressort. Du reste, chaque conduite de guidage et d'implantation de la semence dans le sol s'étend devant le support central du rouleau et passe, durant le travail, au moins partiellement à proximité des bords latéraux correspondants des outils respectifs du rouleau.

Ce dispositif d'implantation de semence dans le sol connu présente un avantage substantiel. En effet, comme chaque conduite de guidage et d'implantation de la semence dans le sol passe, durant le travail, au moins partiellement à proximité des bords latéraux correspondants des outils respectifs du rouleau, ces derniers nettoient continuellement ladite conduite de guidage et d'implantation de la semence dans le sol et empêchent de ce fait, lorsque le dispositif est appelé à travailler dans un champ couvert de résidus végétaux, que ceux-ci restent accrochés aux conduites de guidage et d'implantation de la semence dans le sol. De même, lesdits outils évitent également qu'en terres collantes, il ne se forme des accumulations de terre entre deux conduites de guidage et d'implantation de la semence dans le sol adjacentes.

L'inconvénient de ce dispositif connu réside dans le fait que l'axe de liaison liant chaque conduite de guidage et d'implantation de la semence dans le sol à la structure porteuse s'étend quelque peu devant le plan vertical tangent à la partie frontale de l'enveloppe du rouleau et sensiblement au même niveau que le plan horizontal tangent à la partie supérieure de ladite enveloppe. De ce fait, l'extrémité inférieure de la conduite de guidage et d'implantation de la semence dans le sol, où s'étend l'orifice de sortie de la semence, ne se déplace que d'une valeur limitée en hauteur lors du pivotement de ladite conduite de guidage et d'implantation de la semence dans le sol autour de l'axe de liaison la liant à la structure porteuse.

Le but de la présente invention consiste à résoudre ce problème du dispositif connu tout en conservant ses avantages.

A cet effet, le dispositif d'implantation de semence dans le sol selon l'invention est caractérisé par le fait que, en vue suivant l'axe de rotation de l'élément rotatif, l'axe de liaison liant la conduite de guidage et d'implantation de la semence dans le sol à la structure porteuse, s'étend dans la moitié inférieure du secteur droit supérieur frontal de l'élément rotatif.

Grâce à cette caractéristique, on obtient, lors du pivotement de la conduite de guidage et d'implantation de la semence dans le sol, un déplacement en hauteur acceptable de l'extrémité inférieure de ladite conduite. Ceci assure à la conduite de guidage et d'implantation de la semence dans le sol, d'une part, un bon maintien de la profondeur de travail lorsque seul l'élément rotatif passe au-dessus d'un obstacle enfoui dans le sol et, d'autre part, une bonne capacité de passage au-dessus d'un obstacle enfoui dans le sol indépendamment de l'élément rotatif.

Du reste, bien que l'axe de liaison liant la conduite de guidage et d'implantation de la semence dans le sol à la structure porteuse ait été approché de la surface du sol, tout risque d'accrochage de débris végétaux se trouvant sur celle-ci est éliminé, étant donné que ledit axe de liaison s'étend à l'intérieur de la trajectoire décrite par les outils de l'élément rotatif. A chaque passage d'outil en effet, ledit outil éloigne les débris végétaux qui sont arrivés dans le voisinage de l'axe de liaison.

Avantageusement, l'axe de liaison s'étend dans la partie extérieure de la moitié inférieure du secteur droit supérieur frontal de l'élément rotatif délimitée du côté de l'axe de rotation de l'élément rotatif par la circonférence de diamètre égal à la moitié du diamètre de l'élément rotatif.

Afin que les outils de l'élément rotatif puissent facilement éloigner les débris végétaux de l'axe de liaison, il est préférable que celui-ci s'étende, en vue suivant l'axe de rotation de l'élément rotatif, derrière la conduite de guidage et d'implantation de la semence dans le sol.

Suivant une réalisation particulièrement avantageuse, il est prévu que la structure porteuse comporte un organe support, dont une partie s'étend, en vue suivant l'axe de rotation de l'élément rotatif à l'intérieur de la trajectoire décrite par ledit élément rotatif, la conduite de guidage et d'implantation de la semence dans le sol étant liée à ladite partie de l'organe support au moyen de l'axe de liaison.

La structure porteuse pourra également avantageusement comporter une traverse à laquelle est lié l'organe support.

Préférentiellement, cette liaison sera réalisée de telle manière que la position de l'organe support puisse être réglée dans une direction au moins sensiblement parallèle à l'axe de rotation de l'élément rotatif. La position de la conduite de guidage et d'implantation de la semence dans le sol pourra ainsi être réglée de manière optimale par rapport aux outils correspondants de l'élément rotatif en vue d'un nettoyage optimal.

Avantageusement également, cette traverse s'étend derrière la partie supérieure de la conduite de guidage et d'implantation de la semence dans le sol et préférentiellement au-dessus de l'élément rotatif. Grâce à cet agencement, la traverse peut s'étendre relativement près de l'élément rotatif et, par conséquent, de l'axe de liaison sans qu'il n'y ait toutefois de risque d'accrochage de débris végétaux à celle-ci.

L'organe support peut être constitué par deux ailes s'étendant au moins partiellement à une certaine distance l'une de l'autre. Dans une telle réalisation avantageuse, ledit organe support est constitué par une chape. La conduite de guidage et d'implantation de la semence dans le sol est, quant à elle, munie à l'arrière d'un plat, qui s'étend entre les extrémités inférieures des deux ailes de ladite chape.

Selon une caractéristique supplémentaire, le pivotement de la partie inférieure de la conduite de guidage et d'implantation de semence dans le sol est limité vers l'avant par une butée. Lors du relevage, le ressort plaque ainsi la conduite de guidage et d'implantation de la semence dans le sol contre la butée et évite ainsi que ladite conduite ne vibre au transport. La butée permet ensuite de définir une position basse déterminée au-delà de laquelle le ressort ne peut pas déplacer ladite conduite. On évite ainsi que la conduite ne prenne une position telle que, lors de l'abaissement du dispositif en direction du sol, elle piquerait dans le sol en provoquant l'obturation de l'orifice de sortie de la semence.

Avantageusement, la force de rappel exercée par le ressort sur la conduite de guidage et d'implantation de la semence dans le sol est réglable. Cette force de rappel pourra ainsi être parfaitement adaptée aux conditions de travail pour permettre à la conduite de guidage et d'implantation de la semence dans le sol de maintenir de manière optimale la profondeur d'implantation de la semence dans le sol.

Ledit ressort s'étend avantageusement plus haut que l'axe de liaison et au moins sensiblement dans le même plan que la conduite de guidage et d'implantation de la semence dans le sol.

Lorsque l'organe support de la structure porteuse est constitué par deux ailes, on obtiendra une construction compacte en agençant le ressort de telle sorte qu'il s'étende entre lesdites ailes. Lorsque, du reste, la structure porteuse comporte une traverse s' étendant derrière la conduite de guidage et d'implantation de la semence dans le sol et au-dessus de l'élément rotatif, la construction sera d'autant plus compacte si le ressort s'étend sous la traverse.

Selon une caractéristique supplémentaire de l'invention, il est prévu que l'élément rotatif comporte deux couronnes adjacentes d'outils entre lesquelles passe, durant le travail, au moins partiellement la conduite de guidage et d'implantation de la semence dans le sol. L'efficacité du dispositif est ainsi améliorée étant donné que des outils sont prévus de part et d'autre de la conduite de guidage et d'implantation de la semence dans le sol.

Selon une caractéristique supplémentaire de l'invention, le dispositif d'implantation de semence dans le sol peut comporter plusieurs éléments d'implantation de semence dans le sol.

Une partie au moins de ces différents éléments d'implantation de semence dans le sol peut être agencée de telle sorte que les axes de rotation des éléments rotatifs soient au moins sensiblement confondus.

Lorsque les différents éléments d'implantation de semence dans le sol s'étendent très près l'un de l'autre pour implanter des semences en rangs serrés, comme c'est le cas pour le blé, l'orge, etc., il pourra être prévu, selon une importante caractéristique supplémentaire de l'invention, qu'entre chaque paire de couronnes adjacentes d'outils s'étende une conduite de guidage et d'implantation de semence dans le sol et que la largeur de chaque outil soit quelque peu inférieure à la distance séparant les conduites de guidage et d'implantation de la semence dans le sol de deux éléments d'implantation de semence dans le sol voisins. Dans ce cas, en effet, l'un des bords latéraux desdits outils pourra participer au nettoyage de l'une desdites conduites, tandis que l'autre desdits bords latéraux pourra participer au nettoyage de l'autre conduite.

Dans une réalisation préférentielle d'un tel dispositif, les éléments rotatifs d'une partie au moins des différents éléments d'implantation de semence dans le sol sont réunis en un même rouleau.

L'invention concerne également un semoir équipé d'un dispositif de stockage de la semence, d'un dispositif de dosage de la semence, d'un dispositif de distribution de la semence, d'un dispositif d'implantation de la semence dans le sol, tel que décrit ci-avant et d'un dispositif de véhiculage véhiculant la semence depuis le dispositif de dosage de la semence jusqu'au dispositif d'implantation de la semence dans le sol.

L'invention concerne enfin encore une machine combinée de travail du sol et de semis comportant une machine de préparation de lit de semence et un semoir selon l'invention.

La machine de préparation de lit de semence comporte souvent un rouleau de rappuyage. Ainsi, lorsque le dispositif d'implantation de semence dans le sol selon l'invention comporte notamment une ou des conduites de guidage et d'implantation de la semence dans le sol s'étendant devant la traverse de la structure porteuse et le ou les ressorts de rappel, la construction est tellement compacte que ledit dispositif d'implantation de semence peut s'étendre directement derrière le rouleau de rappuyage de la machine de préparation de lit de semence. ce qui est très important à plusieurs égards.

D'autres caractéristiques de l'invention sont contenues dans les autres sous-revendications ainsi que dans la description suivante d'un exemple de réalisation non limitatif de l'invention faite en référence au dessin annexé sur lequel :
- la figure 1 représente une vue latérale d'une machine combinée de travail du sol et de semis utilisant un dispositif d'implantation de semence dans le sol selon l'invention ;
- la figure 2 représente une vue latérale du dispositif d'implantation coupé suivant le plan II-II défini sur la figure 3 ;
- la figure 3 représente une vue en coupe du dispositif d'implantation suivant le plan III-III défini sur la figure 2 ;
- la figure 4 représente une vue partielle du dispositif d'implantation coupé suivant le plan IV-IV défini sur la figure 2 ;
- la figure 5 représente une vue du montage du rouleau sur la structure porteuse coupé suivant le plan V défini sur la figure 2 ; et
- la figure 6 représente une vue dudit montage suivant la flèche VI définie sur la figure 4.

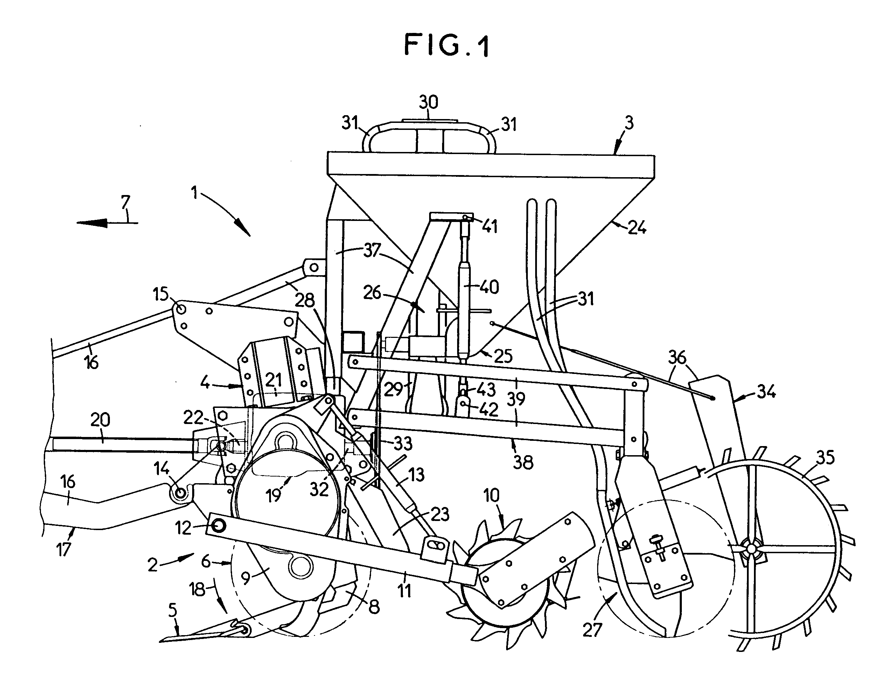

La machine combinée de travail du sol et de semis (1), représentée sur la figure 1, comprend une machine de préparation de lit de semence (2) et un semoir (3).

La machine de préparation de lit de semence comporte un châssis (4) qui supporte une rangée de socs (5) et un rotor (6). La rangée de socs (5) et l'axe longitudinal du rotor (6) s'étendent au moins sensiblement perpendiculairement à la direction d'avance (7) au travail. Chaque soc (5) est lié au châssis (4) au moyen d'un bras de soc (8), tandis que le rotor (6) est, d'une manière connue, guidé en rotation dans deux parois latérales, dont est muni le châssis (4). L'une de ces parois latérales est réalisée sous forme de carter latéral (9).

Le châssis (4) supporte également un rouleau de rappuyage (10) agencé derrière le rotor (6) et dont l'axe longitudinal s'étend au moins sensiblement parallèlement à l'axe longitudinal du rotor (6). Ce rouleau de rappuyage (10), du type "Packer" dans l'exemple représenté, est guidé en rotation entre les extrémités arrière de deux bras (11) liés à leur extrémité avant au châssis (4) au moyen d'une articulation (12) d'axe s'étendant au moins sensiblement parallèlement à l'axe longitudinal du rouleau de rappuyage (10) ou du rotor (6). Entre chacun de ces bras (11) et le châssis (4) est prévue une jambe (13) de longueur réglable. Grâce à ces deux jambes (13), il est possible de régler la hauteur du rouleau de rappuyage (10) par rapport au châssis (4). Au travail, le rouleau de rappuyage (10) roule sur le sol. De cette sorte, il détermine la profondeur de travail des socs (5) et du rotor (6). En sus, le rouleau de rappuyage (10) participe au travail du sol.

Le châssis (4) comporte par ailleurs deux points d'attelage inférieurs (14) et un point d'attelage supérieur (15) prévus pour l'accouplement de la machine combinée de travail du sol et de semis (1) à l'attelage trois points (16) d'un tracteur agricole (17), dont on n'a représenté sur la figure 1 que les bielles dudit attelage.

Le rotor (6) est entraîné en rotation autour de son axe longitudinal dans le sens défini par la flèche (18), c'està-dire qu'à l'avant, le rotor (6) tourne vers le bas. Cet entraînement en rotation est réalisé par des moyens d'entraînement (19), recevant eux-mêmes le mouvement de l'arbre de prise de force (non représenté) du tracteur agricole (17) au moyen d'un arbre de transmission à joints universels (20). Les moyens d'entraînement (19) sont connus de l'homme de l'art et comportent notamment un carter central (21). Le carter central (21) est un carter de renvoi qui pourra avantageusement être constitué sous forme de boîte de vitesse. Il comporte, d'une part, un arbre d'entrée (22) lié à l'arbre de transmission (20) et, d'autre part, un arbre de sortie latéral (non représenté) qui transmet le mouvement au carter latéral (9) transmettant lui-même le mouvement au rotor (6).

Le châssis (4) supporte aussi un capot qui s'étend au-dessus du rotor (6) et dont seul le volet arrière (23) est visible sur la figure 1. Ce volet arrière (23) est, d'une manière connue, réglable angulairement de sorte à influencer la trajectoire de la terre projetée vers l'arrière par le rotor (6).

Le semoir (3), quant à lui, comporte une trémie (24) dans laquelle se trouve la semence à implanter dans le lit de semence préparé par la machine de préparation de lit de semence (2). A la base de la trémie (24) est agencé un dispositif de dosage (25) de la semence. A la sortie de ce dispositif de dosage (25), la semence est transportée par un dispositif de distribution et de véhiculage (26) jusqu'à un dispositif d'implantation de la semence dans le sol (27) qui fait l'objet de la présente invention et qui sera décrit ci-après plus en détail.

Dans l'exemple représenté, le semoir (3) est porté par la machine de préparation de lit de semence (2). A cet effet, le châssis (4) de celle-ci est doté d'une structure d'attelage (28) à laquelle est attelé le semoir (3).

Ce semoir (3) est un semoir pneumatique. A cet effet, son dispositif de distribution et de véhiculage (26) comporte notamment une turbine (29), une tête de distribution (30) et des tuyaux (31). La turbine (29) crée le courant d'air qui véhicule la semence jusqu'à son implantation dans le sol. L'entraînement en rotation de la turbine (29) est réalisé à partir des moyens d'entraînement (19) de la machine de préparation de lit de semence (2). A cet effet, le carter central (21) comporte un arbre de sortie arrière (32) qui entraîne ladite turbine (29) au moyen d'un dispositif à poulies et courroie (33).

Le système d'entraînement (34) du dispositif de dosage (25) est constitué par une roue (35) roulant sur le sol et par des organes de transmission (36) transmettant le mouvement de rotation de la roue (35) au dispositif de dosage (25).

Sur la figure 1, il apparaît aussi que le dispositif d'implantation de la semence dans le sol (27) est lié au châssis (37) du semoir (3) au moyen d'une structure de liaison (38). Celle-ci comporte deux parallélogrammes (39) déformables dans un plan vertical (en fait, dans la figure 1, ces deux parallélogrammes (39) se superposent, de sorte qu'on n'en voit qu'un seul). Ladite structure (38) comporte également, entre chaque parallélogramme (39) et le châssis (37), un tirant (40) de longueur réglable. Ce tirant (40) est lié, d'une part, au châssis (37) au moyen d'une articulation (41) et, d'autre part, au parallélogramme (39) respectif au moyen d'une articulation (42). Ces articulations (41, 42) ont toutes deux un axe dirigé perpendiculairement au plan vertical dans lequel se déforme le parallélogramme (39) respectif. Au niveau de l'articulation (42), le tirant (40) est, en sus, muni d'un trou oblong (43). De cette sorte, le dispositif d'implantation de la semence dans le sol (27) pourra s'adapter à la configuration du sol dans la limite du débattement autorisé par les trous oblongs (43) des tirants (40), et ceci indépendamment de la machine de préparation de lit de semence (2). Du reste, le fait de pouvoir modifier la longueur de chaque tirant (40) permet, pour la position de travail normale du dispositif d'implantation de semence dans le sol (27), de régler la position de l'axe de l'articulation (42) dans le trou oblong (43), quelle que soit la profondeur de travail de la machine de préparation de lit de semence (2).

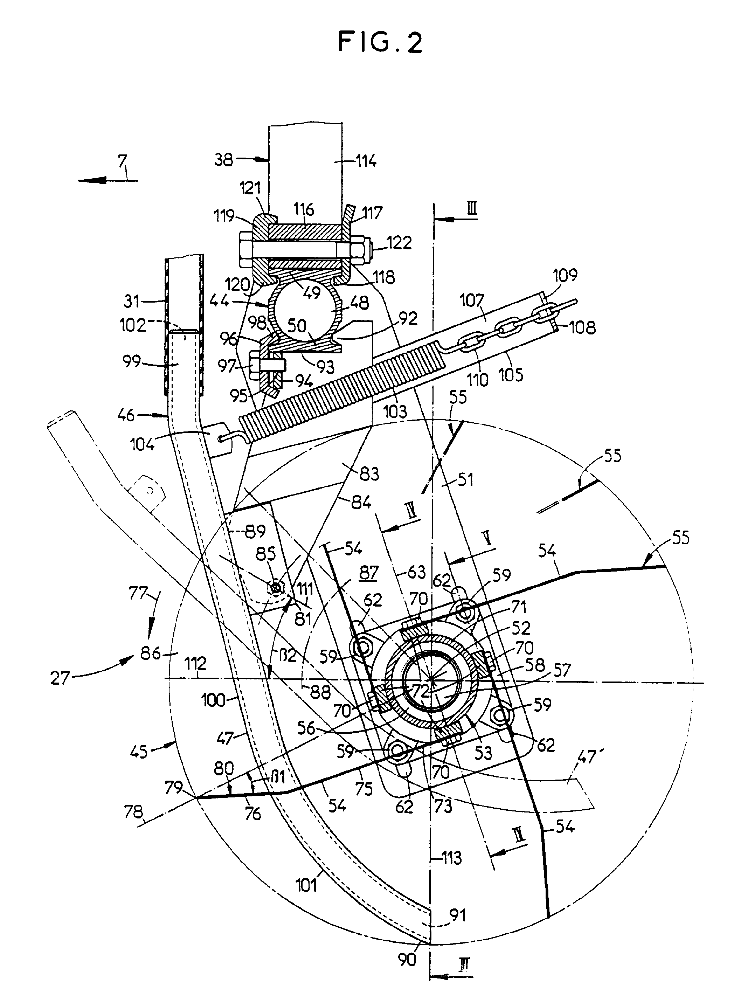

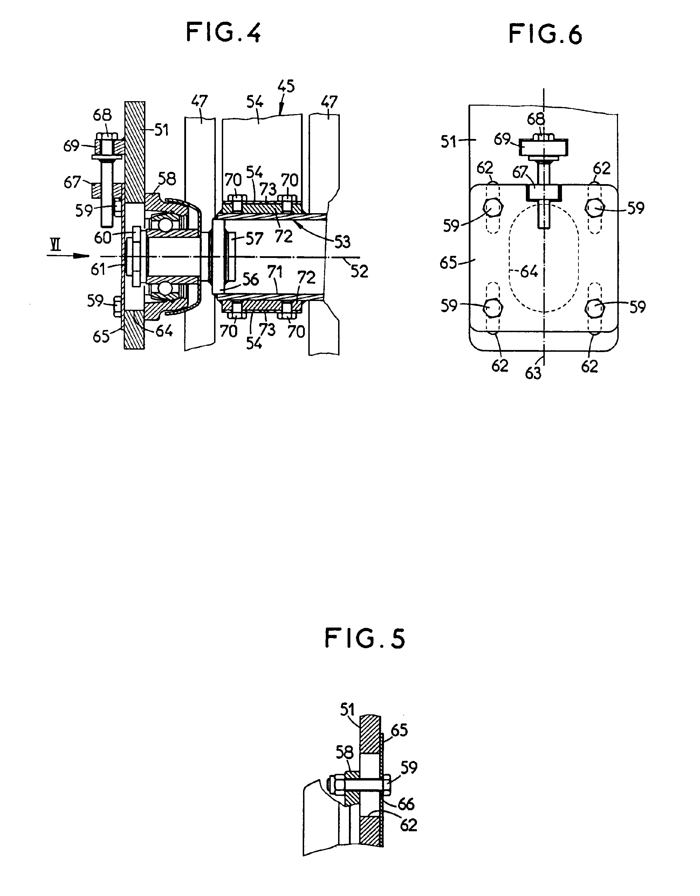

Le dispositif d'implantation de semence dans le sol (27) équipant le semoir (3) de la machine combinée de travail du sol et de semis (1) de la figure 1 apparaît en détail sur les figures 2 à 7.

Il se compose, dans les grandes lignes, d'une structure porteuse (44), d'un rouleau (45) et d'une rangée (46) de conduites de guidage et d'implantation de la semence dans le sol (47).

La structure porteuse (44) comporte, tout d'abord, une traverse tubulaire (48) dont l'axe longitudinal s'étend au moins sensiblement perpendiculairement à la direction d'avance (7) au travail. Cette traverse tubulaire (48) est munie d'une aile supérieure (49) et d'une aile inférieure (50). Ces ailes (49, 50) sont au moins sensiblement planes. Elles s'étendent horizontalement et parallèlement à l'axe longitudinal de la traverse tubulaire (48). A chacune de ses extrémités, cette traverse tubulaire (48) est, en sus, munie d'une console (51) qui s'étend vers le bas et quelque peu vers l'arrière, compte tenu du sens d'avance (7) au travail.

Entre les extrémités libres de ces consoles (51) s'étend le rouleau (45), dont l'axe longitudinal (52) est ainsi dirigé au moins sensiblement perpendiculairement à la direction d'avance (7) au travail. De cette sorte, l'axe longitudinal du rouleau (45) est au moins sensiblement parallèle à l'axe longitudinal de la traverse tubulaire (48) de la structure porteuse (44).

Le rouleau (45) se compose d'un support central (53) et d'un certain nombre d'outils (54) répartis suivant des couronnes (55) radiales à l'axe longitudinal (52) et régulièrement espacées le long dudit support central (53). Du reste, il apparaît également sur la figure 2, qu'une couronne (55) est décalée angulairement autour de l'axe longitudinal (52) par rapport à sa ou ses couronnes (55) adjacentes. Dans l'exemple représenté, ce décalage est d'une trentaine de degrés. De cette sorte, les outils (54) correspondants des différentes couronnes (55) génèrent une hélice autour de l'axe longitudinal (52) du rouleau (45).

Le rouleau (45) est guidé en rotation dans les consoles (51), de sorte à pouvoir tourner autour de son axe longitudinal (52). A cet effet, le support central (53) est muni à chacune de ses extrémités d'un flasque (56) qui supporte un tourillon (57) centré sur l'axe longitudinal (52). Chaque tourillon (57) est guidé en rotation dans un palier à roulement (58) fixé sur la console (51) respective au moyen de quatre boulons (59) et est lié en translation à celui-ci, notamment par un écrou (60) vissé sur son extrémité filetée (61).

La fixation de chaque palier à roulement (58) à la console (51) respective est réalisée de telle manière que la position du rouleau (45) puisse être réglée en hauteur. Pour ce faire, il est prévu dans chaque console (51) quatre trous oblongs (62) dirigés au moins sensiblement parallèlement à l'axe longitudinal (63) de ladite console (51) et qui sont traversés par les quatre boulons (59) respectifs. Il est également prévu dans chaque console (51) une ouverture (64) permettant le déplacement de l'écrou (60) respectif lors du réglage de la hauteur du rouleau (45). Du côté de la face extérieure de chaque console (51) est ensuite prévue une plaque (65) qui comporte quatre trous (66) ayant un diamètre légèrement plus grand que le diamètre de la vis du boulon (59) respectif. Cette plaque (65) est par ailleurs munie d'un écrou (67) dans lequel est vissée une vis de réglage (68) qui peut tourner sans translation dans une crapaudine (69) fixée sur la console (51) respective. Ainsi, après avoir desseré quelque peu les boulons (59), il suffira de tourner les vis de réglage (68) dans le sens approprié pour obtenir la position en hauteur souhaitée du rouleau (45). En effet, comme chaque vis de réglage (68) peut tourner sans translation dans sa crapaudine (69), sa rotation provoquera le déplacement de l'écrou (67) et de la plaque (65) respectifs. Comme les trous (66) prévus dans ladite plaque (65) pour le passage des boulons (59) respectifs n'ont qu'un diamètre légèrement supérieur à celui desdits boulons (59), la plaque (65) emmènera les boulons (59) lors de son déplacement. Ce déplacement des boulons (59) est parfaitement possible puisque les trous (62) prévus dans la console (51) respective pour le passage desdits boulons (59), sont des trous oblongs. Lorsque la position en hauteur souhaitée est atteinte par le rouleau (45), il suffira de rebloquer les boulons (59).

Comme dit ci-avant, le rouleau (45) se compose d'un certain nombre d'outils (54) répartis suivant des couronnes (55) radiales régulièrement espacées le long du support central (53). Dans l'exemple de réalisation représenté, chaque couronne (55) comporte quatre outils (54).

Chaque outil (54) est fixé de manière démontable au support central (53) au moyen de deux vis (70). A cet effet, le support central (53) comporte un tube central (71), lequel est muni, pour chaque outil (54), d'un siège (72) sur lequel repose la partie de fixation (73) de l'outil (54), laquelle s'étend tangentiellement à la trajectoire décrite par le support central (53). Comme bien visible sur la figure 7, ce siège (72) comporte, à l'endroit où la partie de fixation (73) de l'outil (54) respectif quitte ledit siège (72), une surface courbe (74) qui, en vue suivant l'axe longitudinal (52) (axe de rotation) du rouleau (45), s'éloigne progressivement de ladite partie de fixation (73).

Chaque outil (54) comporte ensuite une partie active (75), dont la partie extérieure (76) est, en vue suivant l'axe longitudinal (52) du rouleau (45), droite et dirigée vers l'arrière, compte tenu du sens de rotation du rouleau (45) défini par la flèche (77). Cette partie extérieure (76), de même d'ailleurs que tout l'outil (54) s'étendent, compte tenu du sens de rotation (77) du rouleau (45), en avant d'un plan (78) contenant l'axe longitudinal (52) du rouleau (45) et s'appuyant sur le bord extérieur (79) de ladite partie extérieure (76). Dans l'exemple représenté, la partie extérieure (76) de chaque outil (54) forme avec le plan (78) un angle β1 d'une vingtaine de degrés. Du reste, dans l'exemple représenté, on voit également que la longueur de la partie extérieure (76) est environ égale au tiers de la longueur totale de l'outil (54).

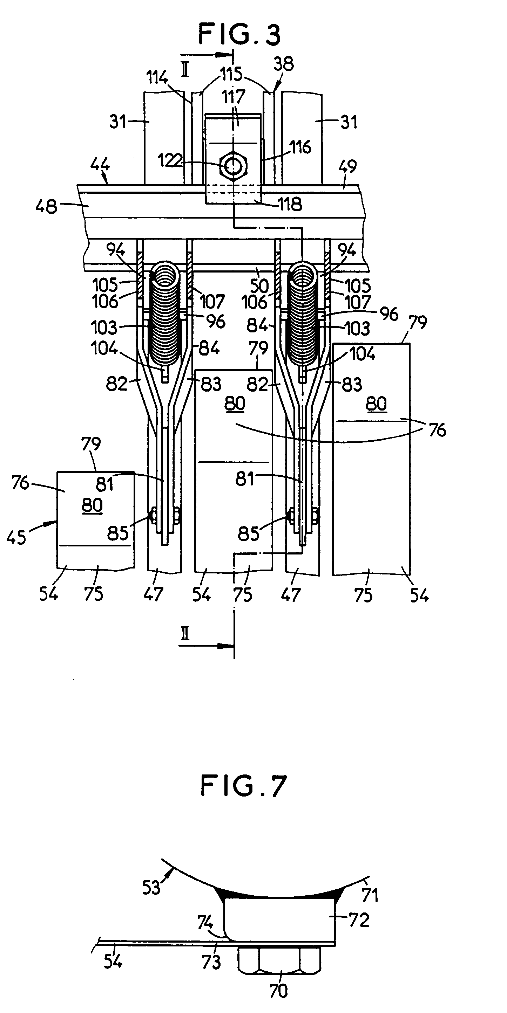

Sur la figure 3, il apparaît très précisément que chaque outil (54) est formé par une lame qui est réalisée en acier à ressort de sorte à posséder une certaine flexibilité. De cette sorte, la partie extérieure (76) comporte un organe porteur (80) qui a, en fait, une forme de plaque. C'est l'ensemble de tous les organes porteurs (80) des outils (54) en contact avec le sol, qui confère au rouleau (45) sa portance.

Il apparaît aussi sur la figure 3, que le bord extérieur (79) qui est, en fait, le bord extérieur de l'organe porteur (80), est droit et est dirigé parallèlement à l'axe longitudinal (52) du rouleau (45).

Comme dit ci-avant, le dispositif d'implantation de semence dans le sol (27) selon l'invention comporte encore une rangée (46) de conduites de guidage et d'implantation de la semence dans le sol (47).

Chaque conduite de guidage et d'implantation de la semence dans le sol (47) est liée individuellement et de manière articulée à la traverse tubulaire (48) qui s'étend, en vue suivant l'axe longitudinal (52) du rouleau (45), derrière la partie supérieure desdites conduites (47) et au-dessus dudit rouleau (45).

En vue de la liaison articulée, chaque conduite de guidage et d'implantation de la semence dans le sol (47) est munie à l'arrière, compte tenu du sens de déplacement (7) au travail, d'un plat (81) dirigé au moins sensiblement perpendiculairement à l'axe longitudinal (52) du rouleau (45). Ce plat (81) s'étend entre les extrémités inférieures des deux ailes (82, 83) d'un organe support (84) réalisé sous forme de chape. auxquelles il est lié au moyen d'un axe de liaison (85). Les deux extrémités inférieures des deux ailes (82, 83) de la chape (84) s'étendent entre les deux couronnes (55) d'outils (54) adjacentes entre lesquelles s'étend la conduite de guidage et d'implantation de la semence dans le sol (47) correspondante. Ces extrémités inférieures des deux ailes (82, 83) de la chape (84) s'étendent d'ailleurs à une distance telle entre les outils (54) correspondants du rouleau (45) que l'axe de liaison (85) s'étend, en vue suivant l'axe longitudinal (52) du rouleau (45), dans la partie extérieure (86) du secteur droit supérieur frontal (87) du rouleau (45) délimitée, du côté de l'axe de rotation (52) du rouleau (45), par la circonférence (88) de diamètre environ égal à la moitié du diamètre du rouleau (45). L'axe de liaison (85) qui s'étend ainsi derrière la conduite de guidage et d'implantation de la semence dans le sol (47), est dirigé au moins sensiblement parallèlement à l'axe longitudinal (52) du rouleau (45). Du reste, chaque aile (82, 83) de la chape (84) comporte, en sus, une face d'appui (89) contre laquelle bute la conduite de guidage et d'implantation de la semence dans le sol (47) lors de son pivotement vers l'avant. Cette butée détermine ainsi la position inférieure maximale de l'extrémité inférieure (90) de la conduite (47) où est agencé l'orifice de sortie (91) de la semence.

Alors que les deux extrémités inférieures des deux ailes (82, 83) de chaque chape (84) sont écartées l'une de l'autre d'une distance légèrement supérieure à l'épaisseur du plat (81) de la conduite de guidage et d'implantation de la semence dans le sol (47) qui s'étend entre elles, les deux extrémités supérieures desdites ailes (82, 83) sont écartées l'une de l'autre d'une distance plus importante, de sorte à obtenir une bonne liaison de la chape (84) à la traverse tubulaire (48). Cette liaison de chaque chape (84) à la traverse tubulaire (48) est réalisée au moyen d'une sorte de queue d'aronde. A cet effet, chaque aile (82, 83) de la chape (84) présente un bec (92) destiné à s'accrocher au bord arrière de l'aile inférieure (50) de la traverse tubulaire (48) et une partie (93) au moins sensiblement droite, destinée à venir en appui contre la face inférieure de ladite aile inférieure (50). A l'avant, entre les deux ailes (82, 83) de la chape (84), est soudé un plat (94) muni d'un trou fileté (95). Sur ce plat (94) est fixée une bride (96) au moyen d'un vis (97) vissée dans le trou fileté (95) dudit plat (94). Cette bride (96) est également munie d'un bec (98) destiné à s'accrocher au bord avant de l'aile inférieure (50) de la traverse tubulaire (48). En vissant ainsi la vis (97), on serre l'aile inférieure (50) de la traverse tubulaire (48) entre les deux becs (92 et 98) des ailes (82, 83), respectivement de la bride (96). Cet agencement permet de régler de manière optimale la position de la conduite de guidage et d'implantation de la semence dans le sol (47) par rapport aux deux couronnes (55) d'outils (54) correspondantes. Il suffit en effet pour cela de débloquer la vis (97), puis de glisser l'ensemble chape (84) - conduite (47) dans le sens approprié le long de l'aile inférieure (50) de la traverse tubulaire (48), jusqu'à ce que la conduite (47) occupe la position désirée. En rebloquant la vis (97), on fixe cette position.

Chaque conduite de guidage et d'implantation de la semence dans le sol (47) s'étend devant le support central (53) du rouleau (45) et passe entre deux couronnes (55) adjacentes d'outils (54). Sur la figure 3, il apparaît précisément que dans cet exemple de réalisation est prévue une conduite de guidage et d'implantation de la semence dans le sol (47) entre chaque paire de couronnes (55) adjacentes d'outils (54). Il apparaît en sus que chaque conduite de guidage et d'implantation de la semence dans le sol (47) est formée par un tube rond et que, de ce fait, elle possède une largeur au moins sensiblement constante. De cette sorte, les bords latéraux de chaque outil (54) peuvent passer relativement près de la conduite de guidage et d'implantation de la semence dans le sol (47) respective. En fait, la largeur de chaque outil (54) est quelque peu inférieure à la distance séparant deux conduites de guidage et d'implantation de la semence dans le sol (47) adjacentes.

Chaque conduite de guidage et d'implantation de la semence dans le sol (47) comporte, en vue suivant l'axe longitudinal (52) du rouleau (45), une partie supérieure (99) au moins sensiblement droite et s'étendant en travail normal, au moins sensiblement verticalement, une partie intermédiaire (100) également au moins sensiblement droite et s'étendant vers l'arrière et vers le bas, et une partie inférieure (101) cintrée vers l'arrière. La partie supérieure (99) comporte un orifice d'entrée (102) par où la conduite (47) est alimentée en semence par un tuyau (31) respectif branché sur ladite partie supérieure (99). La partie inférieure (101), quant à elle, comporte l'orifice de sortie (91) s'étendant au travail dans le sol et par où sort la semence.

Comme dit ci-avant, chaque conduite de guidage et d'implantation de la semence dans le sol (47) est liée individuellement à la traverse tubulaire (48) au moyen d'une chape (84) et d'un axe de liaison (85) dirigé au moins sensiblement parallèlement à l'axe longitudinal (52) du rouleau (45). De cette sorte, ladite conduite (47) peut pivoter par rapport à la structure porteuse (44) et par rapport au rouleau (45) dans un plan au moins sensiblement vertical et au moins sensiblement perpendiculaire à l'axe longitudinal (52) du rouleau (45) pour notamment se dégager du sol en cas de rencontre avec un obstacle. Ce pivotement se fait à l'encontre d'un ressort (103) qui est, dans l'exemple représenté, un ressort de traction. A cet effet, la conduite de guidage et d'implantation de la semence dans le sol (47) est munie d'une patte d'accrochage (104) s'étendant plus haut que le plat (81). Les deux ailes (82, 83) de la chape (84) sont, quant à elles, munies à l'arrière d'une pièce d'accrochage (105) ayant, en vue en plan, une forme en U. Cette pièce d'accrochage (105) est soudée à chaque extrémité libre des deux ailes (106, 107) du U à une aile (82, 83) respective de la chape (84). Dans la base (108) du U formant la pièce d'accrochage (105) est réalisée une rainure (109). Grâce à cet agencement, le ressort (103) qui s'étend plus haut que l'axe de liaison (85) et au moins sensiblement dans le même plan que la conduite (47), est accroché par l'une de ses extrémités à la patte d'accrochage (104), passe entre les extrémités supérieures des deux ailes (82, 83) de la chape (84) et sous la traverse tubulaire (48) et est accroché à l'autre de ses extrémités à la base (108) de la pièce d'accrochage (105) par l'intermédiaire d'une chaînette (110) dont l'un des maillons est introduit dans la rainure (109) pratiquée dans ladite base (108). Pour régler la force de rappel exercée par le ressort (103) sur la conduite (47) respective, il suffira d'introduire un autre maillon de la chaînette (110) dans la rainure (109).

Comme dit ci-avant, l'axe de liaison (85) s'étend dans la partie extérieure (86) du secteur droit supérieur frontal (87) du rouleau (45). Dans la réalisation représentée, ledit axe de liaison (85) se trouve sur un rayon (111) formant avec le plan horizontal (112) passant par l'axe longitudinal (52) du rouleau (45) un angle β2 d'une trentaine de degrés et à une distance de l'axe longitudinal (52) du rouleau (45) égale à environ un tiers de la valeur du diamètre du rouleau (45) qui est d'une cinquantaine de centimètres. Le support central (53), quant à lui, a un diamètre d'environ un cinquième du diamètre du rouleau (45). Ainsi l'orifice de sortie (91) de la conduite (47) qui s'étend, dans la position la plus basse, sensiblement dans le plan vertical (113) passant par l'axe longitudinal (52) du rouleau (45), a un débattement vertical correct d'une dizaine de centimètres environ ((47′) désigne une conduite de guidage et d'implantation de la semence dans sa position haute maximale).

La liaison du dispositif d'implantation de semence dans le sol (27) aux deux parallélogrammes (39) est réalisée de la manière suivante. Chaque parallélogramme (39) est muni à l'arrière d'un montant (114) comportant à son extrémité inférieure une fourche (115) dans laquelle est soudé un fer plat (116) destiné notamment à venir en contact avec la face supérieure de l'aile supérieure (49) de la traverse tubulaire (48). A l'arrière de la fourche (115) est soudé un mors fixe (117) qui comprend un bec (118) destiné à s'accrocher au bord arrière de l'aile supérieure (49) de la traverse tubulaire (48). A l'avant s'étend un mors amovible (119) qui présente un bec inférieur (120) et un bec supérieur (121). Le bec inférieur (120) est destiné à s'accrocher au bord avant de l'aile supérieure (49) de la traverse tubulaire (48), tandis que le bec supérieur (121) est destiné à s'accrocher au fer plat (116). Un boulon (122) enfin traversant de part en part le mors fixe (117), le fer plat (116) et le mors amovible (119), serre l'aile supérieure (49) de la traverse tubulaire (48) entre le bec (118) du mors fixe (117) et le bec inférieur (120) du mors amovible (119).

Le dispositif d'implantation de semence dans le sol (27) qui vient d'être décrit, fonctionne de la manière suivante.

Grâce à la liaison articulée par parallélogramme (39) et au rouleau (45) dont les outils (54) sont munis à leur partie extérieure (76) d'un organe porteur (80), la profondeur d'implantation de la semence est contrôlée par le dispositif (27) lui-même. En tirant le dispositif (27) dans le sens de déplacement (7) au travail, les organes porteurs (80) des différents outils (54) viennent en contact avec le sol. Comme les outils (54) sont disposés sur le rouleau (45) suivant des hélices, l'entraînement en rotation du rouleau (45) se fait de manière régulière. On assure aussi, de ce fait, que le rouleau (45) guide parfaitement les conduites (47) étant donné qu'à chaque instant, il y a plusieurs outils (54) en contact avec le sol.

En tournant les outils (54) passent entre les conduites de guidage et d'implantation de la semence dans le sol (47) et éloignent les débris végétaux qui arrivent en contact avec lesdites conduites (47). Parallèlement, les outils (54) empêchent également la formation d'accumulations de terre entre deux conduites (47) voisines.

Compte tenu de la forme spéciale du bord extérieur (79) de chaque outil (54), on évite que lesdits outils (54) ne transpercent notamment les débris végétaux et n'entraînent ceux-ci lors de leur rotation.

A l'arrière, lorsque les outils (54) sortent de la terre, ils emmènent une petite quantité de celle-ci qui va aussitôt retomber et recouvrir les sillons générés par les conduites (47) adjacentes en vue du recouvrement de la semence déposée au fond de ces sillons par lesdites conduites (47).

La profondeur d'implantation de la semence peut être réglée de manière très précise. Il suffit, en effet, pour cela de régler la position en hauteur du rouleau (45) par rapport à la structure porteuse (44). Ce faisant, la position relative entre les conduites (47) et le rouleau (45) est modifiée étant donné que lesdites conduites (47) ne se déplacent pas lors de ce réglage.

Lesdites conduites (47) sont individuellement liées de manière articulée à la structure porteuse (44). De ce fait, la partie inférieure (101) de chaque conduite (47) peut se déplacer en hauteur indépendamment des autres conduites (47) et du rouleau (45). Une conduite (47) peut ainsi passer par-dessus une pierre enfouie dans le sol sans que la profondeur de travail des autres conduites (47) soit modifiée. Compte tenu de la position de l'axe de liaison (85), il a été possible d'obtenir une bonne course verticale.

Du reste, comme le pivotement de chaque conduite (47) se fait à l'encontre d'un ressort (103), le passage du rouleau (45) sur un obstacle ne modifie que de manière limitée, voire pas du tout, la profondeur d'implantation de la semence dans le sol, étant donné que le ressort (103) force la partie inférieure (101) de la conduite (47) correspondante à se déplacer vers le bas.

Compte tenu de l'agencement particulier :
- de la traverse tubulaire (48) derrière la partie supérieure (99) des conduites (47) et au-dessus du rouleau (45), et
- de la chape (84), du ressort (103) et de l'axe de liaison (85) derrière la conduite (47) correspondante, on obtient un dispositif d'implantation de la semence dans le sol (27) relativement compact. De cette sorte, celui-ci peut être facilement agencé directement derrière le rouleau de rappuyage (10) de la machine de préparation de lit de semence (2).

Chaque ensemble formé par une conduite de guidage et d'implantation de semence dans le sol (47), la partie correspondante de la structure porteuse (44) et la partie correspondante du rouleau (45), constitue un élément d'implantation de semence dans le sol.

Alors que dans l'exemple décrit tous ces éléments d'implantation sont liés l'un à l'autre, on comprendra qu'il est possible, dans le cadre de l'invention, d'avoir des éléments d'implantation indépendants.

Dans l'exemple décrit, les conduites de guidage et d'implantation de semence dans le sol (47) s'étendent très près l'une de l'autre pour le semis de blé, orge, etc. On comprendra cependant que pour le semis de semence en rangs plus écartés, il est possible de réaliser un dispositif (27) dont les différentes conduites (47) soient plus écartées l'une de l'autre.

Mais il est également parfaitement possible de semer des rangs écartés avec un dispositif (27) prévu pour le semis en rangs serrés. Il suffit en effet pour cela de supprimer l'alimentation de certaines conduites (47). Il est, du reste, possible de démonter les conduites (47) non alimentées.

Dans le cadre de l'invention, la machine de préparation de lit de semence (2) et le semoir (3) pourront être différents de ceux décrits.

Enfin, il est parfaitement possible que le dispositif d'implantation de semence dans le sol (27) équipe un semoir (3) utilisé en solo.

Différentes modifications restent possibles sans qu'on ne sorte pour autant du cadre de la présente invention, tel que défini dans les revendications.

## Revendications

1. Dispositif d'implantation de semence dans le sol (27) comportant au moins un élément d'implantation de semence dans le sol muni d'une structure porteuse (44), d'un élément rotatif (45) guidé en rotation dans ladite structure porteuse (44), de sorte à tourner autour d'un axe de rotation (52) qui s'étend transversalement à la direction d'avance (7) au travail, ledit élément rotatif (45) comportant un support central (53) et des outils (54) fixés sur ledit support central (53) suivant au moins une couronne (55), au moins sensiblement radiale à l'axe de rotation (52) de l'élément rotatif (45) et d'une conduite de guidage et d'implantation de la semence dans le sol (47) s'étendant devant le support central (53) de l'élément rotatif (45) et passant, durant le travail, au moins partiellement à proximité du bord latéral correspondant des outils (54) respectifs dudit élément rotatif (45), ladite conduite de guidage et d'implantation de la semence dans le sol (47) étant liée de manière articulée à la structure porteuse (44) au moyen d'un axe de liaison (85) dirigé au moins sensiblement parallèlement à l'axe de rotation (52) de l'élément rotatif (45) et s'étendant devant le support central (53) dudit élément rotatif (45), le pivotement de la partie inférieure (101) de la conduite de guidage et d'implantation de semence dans le sol (47) vers l'arrière autour dudit axe de liaison (85) se faisant à l'encontre d'un ressort (103), caractérisé par le fait qu'en vue suivant l'axe de rotation (52) de l'élément rotatif (45), l'axe de liaison (85) liant la conduite de guidage et d'implantation de la semence dans le sol (47) à la structure porteuse (44) s'étend dans la moitié inférieure du secteur droit supérieur frontal (87) de l'élément rotatif (45).

2. Dispositif d'implantation de semence dans le sol selon la revendication 1, caractérisé par le fait que l'axe de rotation (52) de l'élément rotatif (45) s'étend au moins sensiblement perpendiculairement à la direction d'avance (7) au travail.

3. Dispositif d'implantation de semence dans le sol selon la revendication 1 ou 2, caractérisé par le fait que l'axe de liaison (85) s'étend dans la partie extérieure (86) de la moitié inférieure du secteur droit supérieur frontal (87) de l'élément rotatif (45), délimitée du côté de l'axe de rotation (52) de l'élément rotatif (45) par la circonférence (88) de diamètre égal à la moitié du diamètre de l'élément rotatif (45).

4. Dispositif d'implantation de semence dans le sol selon la revendication 3, caractérisé par le fait que l'axe de liaison (85) s'étend, en vue suivant l'axe de rotation (52) de l'élément rotatif (45), derrière la conduite de guidage et d'implantation de la semence dans le sol (47).

5. Dispositif d'implantation de semence dans le sol selon la revendication 4, caractérisé par le fait que la structure porteuse (44) comporte un organe support (84), dont une partie s'étend, en vue suivant l'axe de rotation (52) de l'élément rotatif (45), à l'intérieur de la trajectoire décrite par ledit élément rotatif (45), la conduite de guidage et d'implantation de la semence dans le sol (47) étant liée à ladite partie de l'organe support (84) au moyen de l'axe de liaison (85).

6. Dispositif d'implantation de semence dans le sol selon la revendication 5, caractérisé par le fait que la structure porteuse (44) comporte en sus une traverse (48) à laquelle est lié l'organe support (84).

7. Dispositif d'implantation de semence dans le sol selon la revendication 6, caractérisé par le fait que l'organe support (84) est lié à la traverse (48) de manière réglable dans une direction au moins sensiblement parallèle à l'axe de rotation (52) de l'élément rotatif (45).

8. Dispositif d'implantation de semence dans le sol selon la revendication 6 ou 7, caractérisé par le fait qu'en vue suivant l'axe de rotation (52) de l'élément rotatif (45), la traverse (48) s'étend derrière la partie supérieure (99) de la conduite de guidage et d'implantation de la semence dans le sol (47).

9. Dispositif d'implantation de semence dans le sol selon la revendication 8, caractérisé par le fait que la traverse (48) s'étend au-dessus de l'élément rotatif (45).

10. Dispositif d'implantation de semence dans le sol selon l'une au moins des revendications 5 à 9, caractérisé par le fait que l'organe support (84) est constitué par deux ailes (82, 83) s'étendant au moins partiellement à une certaine distance l'une de l'autre.

11. Dispositif d'implantation de semence dans le sol selon la revendication 10, caractérisé par le fait que l'organe support (84) est constitué par une chape et que la conduite de guidage et d'implantation de la semence dans le sol (47) comporte, à l'arrière, un plat (81) qui s'étend entre les extrémités inférieures des deux ailes (82, 83) de ladite chape (84).

12. Dispositif d'implantation de semence dans le sol selon l'une au moins des revendications 1 à 11, caractérisé par le fait que le pivotement de la partie inférieure (101) de la conduite de guidage et d'implantation de la semence dans le sol (47) est limité vers l'avant par une butée (89).

13. Dispositif d'implantation de semence dans le sol selon l'une au moins des revendications 1 à 12, caractérisé par le fait que la force de rappel exercée par le ressort (103) sur la conduite de guidage et d'implantation de la semence dans le sol (47) est réglable.

14. Dispositif d'implantation de semence dans le sol selon l'une au moins des revendications 1 à 13, caractérisé par le fait que le ressort (103) s'étend plus haut que l'axe de liaison (85).

15. Dispositif d'implantation de semence dans le sol selon la revendication 14, caractérisé par le fait que le ressort (103) s'étend au moins sensiblement dans le même plan que la conduite de guidage et d'implantation de la semence dans le sol (47).

16. Dispositif d'implantation de semence dans le sol selon la revendication 14 ou 15 et la revendication 10 ou 11, caractérisé par le fait que le ressort (103) s'étend entre les deux ailes (82, 83) de l'organe support (84).

17. Dispositif d'implantation de semence dans le sol selon les revendications 16 et 9, caractérisé par le fait que le ressort (103) s'étend sous la traverse (48).

18. Dispositif d'implantation de semence dans le sol selon l'une au moins des revendications 14 à 17, caractérisé par le fait que le ressort (103) est un ressort de traction.

19. Dispositif d'implantation de semence dans le sol selon l'une au moins des revendications 1 à 18, caractérisé par le fait que l'élément rotatif (45) comporte deux couronnes (55) adjacentes d'outils (54) entre lesquelles passe, durant le travail, au moins partiellement la conduite de guidage et d'implantation de la semence dans le sol (47).

20. Dispositif d'implantation de semence dans le sol selon l'une au moins des revendications 1 à 19, caractérisé par le fait qu'il comporte plusieurs éléments d'implantation de semence dans le sol.

21. Dispositif d'implantation de semence dans le sol selon la revendication 20, caractérisée par le fait qu'une partie au moins desdits éléments d'implantation de semence dans le sol est agencée de telle sorte que les axes de rotation (52) des éléments rotatifs (45) soient au moins sensiblement confondus.

22. Dispositif d'implantation de semence dans le sol selon la revendication 21, caractérisé par le fait qu'entre chaque paire de couronnes (55) adjacentes d'outils (54) est prévue une conduite de guidage et d'implantation de la semence dans le sol (47) et que la largeur de chaque outil (54) est quelque peu inférieure à la distance séparant les conduites de guidage et d'implantation de la semence dans le sol (47) de deux éléments d'implantation de semence dans le sol voisins.

23. Dispositif d'implantation de semence dans le sol selon la revendication 22 ou 23, caractérisé par le fait que les éléments rotatifs (45) d'une partie au moins des différents éléments d'implantation de semence dans le sol sont réunis en un même rouleau (45).

24. Semoir (3) comportant un dispositif de stockage (24) de la semence, un dispositif de dosage de la semence (25), un dispositif de distribution de la semence (26), un dispositif d'implantation de la semence dans le sol (27) et un dispositif de véhiculage (26) véhiculant la semence depuis le dispositif de dosage de la semence (25) jusqu'au dispositif d'implantation de la semence dans le sol (27), caractérisé par le fait que ledit dispositif d'implantation de semence dans le sol (27) est un dispositif selon l'une au moins des revendications 1 à 23.

25. Machine combinée de travail du sol et de semis (1), comportant une machine de préparation d'un lit de semence (2) et un semoir (3), caractérisée par le fait qu'elle utilise un semoir (3) selon la revendication 24.

26. Machine combinée de travail du sol et de semis (1) selon la revendication 25, caractérisée par le fait que la machine de préparation d'un lit de semence (2) comporte un rouleau de rappuyage (10) et que le dispositif d'implantation de la semence dans le sol (27) s'étend directement derrière ledit rouleau de rappuyage (10).

## Patentansprüche

1. Vorrichtung zur Einführung von Saatgut in den Boden (27), die mindestens ein Element zur Einführung von Saatgut in den Boden umfasst, das mit einem Tragwerk (44), mit einem Rotationselement (45), das durch das genannte Tragwerk (44) rotierend geführt wird, so dass es sich um eine quer zur Arbeitsvorschubrichtung (7) verlaufende Rotationsachse (52) dreht, wobei das genannte Rotationselement (45) eine zentrale Halterung (53) und Werkzeuge (54) umfasst, die auf der genannten zentralen Halterung (53) nach mindestens einem mindestens annähernd radial zur Rotationsachse (52) des Rotationselementes (45) verlaufenden Kranz (55) angeordnet sind, sowie mit einer Leitung zum Transport und zur Einführung von Saatgut in den Boden (47) versehen ist, die vor der zentralen Halterung (53) des Rotationselementes (45) verläuft und bei der Arbeit mindestens teilweise in der Nähe des entsprechenden seitlichen Randes der jeweiligen Werkzeuge (54) des genannten Rotationselementes (45) vorbeigeht, wobei die genannte Leitung zum Transport und zur Einführung von Saatgut in den Boden (47) mit Hilfe einer Verbindungsachse (85) gelenkig mit dem Tragwerk (44) verbunden ist, welche Verbindungsachse (85) mindestens annähernd parallel zur Rotationsachse (52) des Rotationselementes (45) und vor der zentralen Halterung (53) des genannten Rotationselementes (45) verläuft, wobei das Schwenken des unteren Teiles (101) der Leitung zum Transport und zur Einführung von Saatgut in den Boden (47) nach hinten um die genannte Verbindungsachse (85) gegen eine Feder (103) erfolgt, dadurch gekennzeichnet, dass -in Richtung der Rotationsachse (52) des Rotationselementes (45) gesehen - die Verbindungsachse (85), die die Leitung zum Transport und zur Einführung von Saatgut in den Boden (47) mit dem Tragwerk (44) verbindet, in der unteren Hälfte des oberen vorderen geraden Kreisauschnittes (87) des Rotationselementes (45) angeordnet ist.

2. Vorrichtung zur Einführung von Saatgut in den Boden nach Anspruch 1, dadurch gekennzeichnet, dass die Rotationsachse (52) des Rotationselementes (45) zumindest annähernd senkrecht zur Arbeitsvorschubrichtung (7) verläuft.

3. Vorrichtung zur Einführung von Saatgut in den Boden nach Anspruch 1 oder 2, dadurch gekennzeichnet, dass die Verbindungsachse (85) in dem äusseren Teil (86) der unteren Hälfte des oberen vorderen geraden Kreisauschnittes (87) des Rotationselementes (45) angeordnet ist, die auf der Seite der Rotationsachse (52) des Rotationselementes (45) durch die Kreislinie (88) begrenzt wird, welche einen Durchmesser besitzt, der gleich der Hälfte des Durchmessers des Rotationselementes (45) ist.

4. Vorrichtung zur Einführung von Saatgut in den Boden nach Anspruch 3, dadurch gekennzeichnet, dass die Verbindungsachse (85) - in Richtung der Rotationsachse (52) des Rotationselementes (45) gesehen - hinter der Leitung zum Transport und zur Einführung von Saatgut in den Boden (47) angeordnet ist.

5. Vorrichtung zur Einführung von Saatgut in den Boden nach Anspruch 4, dadurch gekennzeichnet, dass das Tragwerk (44) ein Halteorgan (84) umfasst, welches - in Richtung der Rotationsachse (52) des Rotationselementes (45) gesehen - ein Teil besitzt, das innerhalb der von dem Rotationselement (45) beschriebenen Umlaufbahn liegt, wobei die Leitung zum Transport und zur Einführung von Saatgut in den Boden (47) mit Hilfe der Verbindungsachse (85) mit dem genannten Teil des Halteorgans (84) verbunden ist.

6. Vorrichtung zur Einführung von Saatgut in den Boden nach Anspruch 5, dadurch gekennzeichnet, dass das Tragwerk (44) ausserdem eine Strebe (48) umfasst, mit der das Halteorgan (84) verbunden ist.

7. Vorrichtung zur Einführung von Saatgut in den Boden nach Anspruch 6, dadurch gekennzeichnet, dass das Halteorgan (84) mit der Strebe (48) in einer zur Rotationsachse (52) des Rotationselementes (45) zumindest annähernd parallelen Richtung verstellbar verbunden ist.

8. Vorrichtung zur Einführung von Saatgut in den Boden nach Anspruch 6 oder 7, dadurch gekennzeichnet, dass die Strebe (48) - in Richtung der Rotationsachse (52) des Rotationselementes (45) gesehen - hinter dem oberen Teil (99) der Leitung zum Transport und zur Einführung von Saatgut in den Boden (47) verläuft.

9. Vorrichtung zur Einführung von Saatgut in den Boden nach Anspruch 8, dadurch gekennzeichnet, dass die Strebe (48) oberhalb des Rotationselementes (45) verläuft.

10. Vorrichtung zur Einführung von Saatgut in den Boden nach zumindest einem der Ansprüche 5 bis 9, dadurch gekennzeichnet, dass das Halteorgan (84) von zwei Flügeln (82, 83) gebildet wird, die mindestens teilweise in bestimmtem Abstand zueinander verlaufen.

11. Vorrichtung zur Einführung von Saatgut in den Boden nach Anspruch 10, dadurch gekennzeichnet, dass das Halteorgan (84) aus einem Bügel besteht und dass die Leitung zum Transport und zur Einführung von Saatgut in den Boden (47) hinten eine Abflachung (81) umfasst, die zwischen den unteren Enden der beiden Flügel (82, 83) des genannten Bügels (84) verläuft.

12. Vorrichtung zur Einführung von Saatgut in den Boden nach mindestens einem der Ansprüche 1 bis 11, dadurch gekennzeichnet, dass das Schwenken des unteren Teiles (101) der Leitung zum Transport und zur Einführung von Saatgut in den Boden (47) nach vom hin durch einen Anschlag (89) begrenzt wird.

13. Vorrichtung zur Einführung von Saatgut in den Boden nach mindestens einem der Ansprüche 1 bis 12, dadurch gekennzeichnet, dass die von der Feder (103) auf die Leitung zum Transport und zur Einführung von Saatgut in den Boden (47) ausgeübte Rückstellkraft einstellbar ist.

14. Vorrichtung zur Einführung von Saatgut in den Boden nach mindestens einem der Ansprüche 1 bis 13, dadurch gekennzeichnet, dass die Feder (103) höher als die Verbindungsachse (85) liegt.

15. Vorrichtung zur Einführung von Saatgut in den Boden nach Anspruch 14, dadurch gekennzeichnet, dass die Feder (103) mindestens annähernd in der gleichen Ebene wie die Leitung zum Transport und zur Einführung von Saatgut in den Boden (47) angeordnet ist.

16. Vorrichtung zur Einführung von Saatgut in den Boden nach Anspruch 14 oder 15 und Anspruch 10 oder 11, dadurch gekennzeichnet, dass die Feder (103) zwischen den beiden Flügeln (82, 83) des Halteorgans (84) verläuft.

17. Vorrichtung zur Einführung von Saatgut in den Boden nach den Ansprüchen 16 und 9, dadurch gekennzeichnet, dass die Feder (103) unter der Strebe (48) angeordnet ist.

18. Vorrichtung zur Einführung von Saatgut in den Boden nach mindestens einem der Ansprüche 14 bis 17, dadurch gekennzeichnet, dass die Feder (103) eine Zugfeder ist.

19. Vorrichtung zur Einführung von Saatgut in den Boden nach mindestens einem der Ansprüche 1 bis 18, dadurch gekennzeichnet, dass das Rotationselement (45) zwei nebeneinanderliegende Kränze (55) von Werkzeugen (54) umfasst, zwischen denen die Leitung zum Transport und zur Einführung von Saatgut in den Boden (47) bei der Arbeit zumindest teilweise hindurchgeht.

20. Vorrichtung zur Einführung von Saatgut in den Boden nach mindestens einem der Ansprüche 1 bis 19, dadurch gekennzeichnet, dass sie mehrere Elemente zur Einführung von Saatgut in den Boden umfasst.

21. Vorrichtung zur Einführung von Saatgut in den Boden nach Anspruch 20, dadurch gekennzeichnet, dass mindestens einige der genannten Elemente zur Einführung von Saatgut in den Boden so angeordnet sind, dass die Rotationsachsen (52) der Rotationselemente (45) mindestens annähernd zusammenfallen.

22. Vorrichtung zur Einführung von Saatgut in den Boden nach Anspruch 21, dadurch gekennzeichnet, dass zwischen jedem Paar von nebeneinanderliegenden Kränzen (55) von Werkzeugen (54) eine Leitung zum Transport und zur Einführung von Saatgut in den Boden (47) vorgesehen ist und, dass die Breite eines jeden Werkzeugs (54) etwas kleiner ist als der Abstand zwischen den Leitungen zum Transport und zur Einführung von Saatgut in den Boden (47) von den beiden benachbarten Elementen zur Einführung von Saatgut in den Boden.

23. Vorrichtung zur Einführung von Saatgut in den Boden nach Anspruch 22 oder 23, dadurch gekennzeichnet, dass die Rotationselemente (45) mindestens einiger der verschiedenen Elemente zur Einführung von Saatgut in den Boden in eine gleiche Walze (45) vereint sind.

24. Sämaschine (3), die eine Vorrichtung zur Lagerung (24) des Saatgutes, eine Vorrichtung zur Dosierung des Saatgutes (25), eine Vorrichtung zur Verteilung des Saatgutes (26), eine Vorrichtung zur Einführung des Saatgutes in den Boden (27) und eine Fördervorrichtung (26) umfasst, welche das Saatgut von der Dosiervorrichtung des Saatgutes (25) bis zur Vorrichtung zur Einführung des Saatgutes in den Boden (27) transportiert, dadurch gekennzeichnet, dass die genannte Vorrichtung zur Einführung von Saatgut in den Boden (27) eine Vorrichtung nach mindestens einem der Ansprüche 1 bis 23 ist.

25. Kombinierte Bodenbearbeitungs- und Saatmaschine (1), die eine Saatbettbereitungsmaschine (2) und eine Sämaschine (3) umfasst, dadurch gekennzeichnet, dass sie eine Sämaschine (3) nach Anspruch 24 verwendet.

26. Kombinierte Bodenbearbeitungs- und Saatmaschine (1) nach Anspruch 25, dadurch gekennzeichnet, dass die Saatbettbereitungsmaschine (2) eine Andrückwalze (10) umfasst und, dass die Vorrichtung zur Einführung von Saatgut in den Boden (27) direkt hinter der genannten Andrückwalze (10) angeordnet ist.

## Claims

1. Device for planting seed in the soil (27) comprising at least one element for planting seed in the soil provided with a carrying structure (44), a rotary element (45) guided in rotation in said carrying structure (44), in order to rotate around an axis of rotation (52) which extends crosswise to the direction of advance (7) at work, said rotary element (45) comprising a central support (53) and tools (54) fastened to said central support (53) in at least one ring (55), oriented at least approximately radial with respect to the axis of rotation (52) of the rotary element (45), and a pipe (47) for guiding and planting seed in the soil extending in front of the central support (53) of the rotary element (45) and passing, at work, at least partly in proximity to the corresponding lateral edge of the respective tools (54) of said rotary element (45), said pipe (47) for guiding and planting seed in the soil being connected in an articulated manner to the carrying structure (44) by means of a connecting pin (85) directed at least approximately parallel to the axis of rotation (52) of the rotary element (45) and extending in front of the central support (53) of said rotary element (45), the rearward pivoting of the lower part (101) of the pipe (47) for guiding and planting seed in the soil around said connecting pin (85) being performed in opposition to a spring (103), characterized in that, as seen along the axis of rotation (52) of the rotary element (45), the connecting pin (85) connecting the pipe (47) for guiding and planting seed in the soil to the carrying structure (44) extends in the lower half of the upper frontal right sector (87) of the rotary element (45).

2. Device for planting seed in the soil according to claim 1, characterized in that the axis of rotation (52) of the rotary element (45) extends at least approximately perpendicularly to the direction of advance (7) at work.

3. Device for planting seed in the soil according to claim 1 or 2, characterized in that the connecting pin (85) extends in the outer part (86) of the lower half of the upper frontal right sector (87) of the rotary element (45), delimited on the side of the axis of rotation (52) of the rotary element (45) by the circumference (88) of a diameter equivalent to the half of the diameter of the rotary element (45).

4. Device for planting seed in the soil according to claim 3, characterized in that the connecting pin (85) extends, as seen along the axis of rotation (52) of the rotary element (45), behind the pipe (47) for guiding and planting seed in the soil.

5. Device for planting seed in the soil according to claim 4, characterized in that the carrying structure (44) comprises a support element (84), one part of which extends, as seen along the axis of rotation (52) of the rotary element (45), inside of the trajectory of said rotary element (45), the pipe (47) for guiding and planting seed in the soil being connected to said part of the support element (84) by means of the connecting pin (85).

6. Device for planting seed in the soil according to claim 5, characterized in that the carrying structure (44) additionally comprises a crossbeam (48) to which is connected the support element (84).

7. Device for planting seed in the soil according to claim 6, characterized in that the support element (84) is connected to the crossbeam (48) so as to be adjustable in a direction at least approximately parallel to the axis of rotation (52) of the rotary element (45).

8. Device for planting seed in the soil according to claim 6 or 7, characterized in that as seen along the axis of rotation (52) of the rotary element (45), the crossbeam (48) extends behind the upper part (99) of the pipe (47) for guiding and planting seed in the soil.

9. Device for planting seed in the soil according to claim 8, characterized in that the crossbeam (48) extends above the rotary element (45).

10. Device for planting seed in the soil according to one at least of claims 5 to 9, characterized in that the support element (84) is made up of two wings (82, 83) extending at least partly in a certain distance one from the other.

11. Device for planting seed in the soil according to claim 10, characterized in that the support element (84) is made in the form of a yoke and that the pipe (47) for guiding and planting seed in the soil comprises, at the rear, a flat (81) extending between the lower ends of the two wings (82, 83) of said yoke (84).

12. Device for planting seed in the soil according to one at least of claims 1 to 11, characterized in that the forward pivoting of the lower part (101) of the pipe (47) for guiding and planting seed in the soil is limited by a stop (89).

13. Device for planting seed in the soil according to one at least of claims 1 to 12, characterized in that the return force exerted by the spring (103) on the pipe (47) for guiding and planting seed in the soil is adjustable.

14. Device for planting seed in the soil according to one at least of claims 1 to 13, characterized in that the spring (103) extends higher than the connecting pin (85).

15. Device for planting seed in the soil according to claim 14, characterized in that the spring (103) extends at least approximately in the same plane that the pipe (47) for guiding and planting seed in the soil.

16. Device for planting seed in the soil according to claim 14 or 15 and claim 10 or 11, characterized in that the spring (103) extends between the two wings (82, 83) of the support element (84).

17. Device for planting seed in the soil according to claims 16 and 9, characterized in that the spring (103) extends under the crossbeam (48).

18. Device for planting seed in the soil according to one at least of claims 14 to 17, characterized in that the spring (103) is a draw-spring.

19. Device for planting seed in the soil according to one at least of claims 1 to 18, characterized in that the rotary element (45) comprises two adjacent rings (55) of tools (54) between which passes, at work, at least partly the pipe (47) for guiding and planting seed in the soil.

20. Device for planting seed in the soil according to one at least of claims 1 to 19, characterized in that it comprises several elements for planting seed in the soil.

21. Device for planting seed in the soil according to claim 20, characterized in that one part at least of said elements for planting seed in the soil are arranged such that the axes of rotation (52) of the rotary elements (45) are at least approximately merged.

22. Device for planting seed in the soil according to claim 21, characterized in that between each couple of adjacent rings (55) of tools (54) is provided a pipe (47) for guiding and planting seed in the soil and that the width of each tool (54) is slightly smaller than the distance separating the pipe (47) for guiding and planting seed in the soil of two adjacent elements for planting seed in the soil.

23. Device for planting seed in the soil according to claim 22 or 23, characterized in that the rotary elements (45) of at least some of the different elements for planting seed in the soil are joined in one roller (45).

24. Seeder apparatus (3) comprising a device (24) for storing seed, a device (25) for dosing seed, a device (26) for distributing seed, a device (27) for planting seed in the soil and a device (26) for conveying seed from the device (25) for dosing seed to the device (27) for planting seed in the soil, characterized in that said device (27) for planting seed in the soil is a device according to one at least of claims 1 to 23.

25. Combined machine (1) for working the soil and for sowing seed comprising a machine (2) for preparing a seed bed and a seeder apparatus (3), characterized in that it uses a seeder apparatus (3) according to claim 24.

26. Combined machine (1) for working the soil and sowing seed according to claim 25, characterized in that the machine (2) for preparing a seed bed comprises a packing roller (10) and that the device (27) for planting seed in the soil extends directly behind said packing roller (10).
